Europäisches Patentamt

European Patent Office

Office européen des brevets

(19)

(11) Publication number : **0 656 551 A1**

(12) # EUROPEAN PATENT APPLICATION

(21) Application number : 94309028.2

(51) Int. Cl.⁶ : **G02B 6/34,** G02B 6/38

(22) Date of filing : 05.12.94

(30) Priority : 03.12.93 US 161702
09.08.94 US 287823

(43) Date of publication of application :
07.06.95 Bulletin 95/23

(84) Designated Contracting States :
DE FR GB IT

(71) Applicant : Micron Optics, Inc.
2801 Buford Highway,
Suite 140
Atlanta, Georgia 30329 (US)

(72) Inventor : Miller,Calvin M.
3016 Lenox Road
Atlanta, GA 30324 (US)
Inventor : Miller,Jeffrey W.
416 Calibre Lake Parkway
Symrna, GA 30082 (US)

(74) Representative : Lord, Hilton David
MARKS & CLERK,
57-60 Lincoln's Inn Fields
London WC2A 3LS (GB)

(54) Ferrule holder for temperature compensated fiber Fabry-Perot filters.

(57)    A Fibre Fabry-Perot filter (FPF) having a fer-
rule holder comprising :
a body having a core (35) to contain the ferrule
(10), a peripheral portion (36) surrounding the
core, core and peripheral portion extending the
length of the body, a duct being provided
through the core to contain the ferrule and
being shaped to provide flats for three-point
contact between the ferrule and the core and
sized to provide a close fit with the ferrule at the
passageway flats while allowing rotation of the
ferrule in the duct ; and
means for securing the ferrule (24A,24B,24C) in
the passageway to establish three-point contact
between the ferrule and the holder body
the core preferably being of a material having a
thermal expansion coefficient substantially
matched to that of the ferrule.

FIGURE 9A

This invention is in the field of fibre optics and relates specifically to ferrule holders and ferrule alignment fixtures useful for making low-loss optic fibre connections and particularly useful in fibre Fabry-Perot filters (FFPs). The holders and fixtures of this invention are also useful in temperature compensated FFPs.

Transmission of information by light over optical fibres is widely used in long-haul telecommunication systems. Optical signals are generated, transported along optical fibres and detected to regenerate the original electronic signal with as little change as possible. Fibre transmission media are combined with electronic signal processing resulting in lowered cost and high quality digital transmission.

In general, fibre optic systems require fibre connectors for precise alignment of optic fibre ends within the system. One technique for making fibre connections employs fibre ferrules which are cylindrical, typically glass, elements supporting optic fibres in an axially passageway with a fibre end flush with one end of the ferrule. Connections are made by aligning ferrules with fibre ends opposed in an alignment fixture.

Fibre optic system applications require direct optical processing of signals without conversion to electronic signals necessitating optical signal processors such as amplifiers, multiplex/demultiplexes, splitters, couplers, filters, equalisers, and switches adapted for use with optical fibres. Economical, low-loss, easily and reproducibly manufactured, single-mode optical fibre filters, adaptable to a desired bandwidth, FSR (Free Spectral Range) and finesse, are important components for such fibre optic systems. A fibre Fabry-Perot (FFP) interferometric filter is such a filter.

FFPs with optical properties suitable for telecommunication applications employing fibre ferrules to create optical cavities have been described. These FFPs contain fibre ferrule assemblies with aligned optical fibre extending through the ferrules forming an optically continuous path containing a tunable optical cavity. Two highly reflective, preferably plane-parallel mirrors, in the ferrule assembly transverse to the fibre path create the optical cavity. Ferrules are supported in precision fixtures with fibres aligned to maximise signal transmission through the assembly. This design eliminates the need for collimating and focusing lenses, improves stability and optical performance and makes the FFPs compatible with single-mode optical fibres and other fibre devices.

C.M. Miller US-A-5,212,745, for example, describes the transmission characteristics of a typical FFP. An FFP is tuned between successive resonance maxima by, for example, changing the optical cavity length, $l_c$. (Alternatively, tuning of an FFP can be accomplished by changing the index of refraction, n.) The bandwidth (BW) is the full width at half maximum. The finesse of the filter, $F = FSR/BW$, can be measured experimentally by measuring the ratio of FSR to BW from the transmission curves generated by varying $l_c$ with constant wavelength, $\lambda$. Measuring F in this manner accounts for all non-dispersive losses including mirror absorption, diffraction and alignment losses. If $\lambda$ is varied to generate transmission curves, dispersive properties of the mirrors, fibres, and cavity modes are also included in the measured FSR.

Fixed-wavelength and tunable-wavelength FFPs having aligned ferrule assemblies have been described. Changing the distance between optic fibre ends in the cavity or stretching an optical fibre in the cavity tunes the wavelength. Tuning can be accomplished by controlled temperature variation of the FFP (temperature-tuned) or by changing the relative position of the ferrule elements, without destroying alignment, for example, by electromechanical means such as piezoelectric transducers.

Ferrule configurations for FFP filters having either a continuous fibre or a fibre gap in the optical cavity have been described. (J. Stone and L. W. Stulz (1987) Elect. Lett., $\underline{23}$(15):781-783). FFP configurations having a fibre gap are preferred for telecommunications applications. The Stone and Stulz Type III FFP configuration has an internal fibre-containing waveguide positioned between opposed faces of two fibre ferrules each of which has a fibre end. A mirrored-end of one ferrule and a mirrored-end of the waveguide remote from that ferrule form the optical cavity such that the fibre of the waveguide is within the optical cavity. The length of the fibre gap between the waveguide and the mirror-ended ferrule can be varied to tune the filter. US-A-5,062,684 describes FFPs having two wafered ferrules, each having a wafer waveguide rigidly bonded to a mirror-ended ferrule, to form an optical cavity between the two embedded mirrors. The optical cavity in this configuration contains a tunable fibre gap between the wafered ends of the ferrules. US-A-5,212,746 describes a single-wafered ferrule FFP configuration in which the optical cavity is formed by aligning a mirror-ended ferrule and a wafered ferrule with an embedded mirror.

FFP ferrules and waveguides require high precision axial alignment to minimise transmission loss. US-A-4,861,136 describes FFPs tuned using piezoelectric transducers (PZTs). Elaborate alignment brackets and fixtures were necessary to change cavity length without detriment to fibre alignment. EP-A-0 457 484 describes another alignment fixture for PZT-tuned FFPs in which ferrules are aligned by adjusting the relative tightness of set screws, which directly contact a ferrule around its circumference. U.S. patents 5,212,745 and 5,289,552 describe alignment fixtures which provide for adjustment of fibre alignment by use of set screws which contact a ferrule directly or indirectly via an intermediate sleeve.

G.F. De Veau and C.M. Miller US-A4,545,644 describes a rotary mechanical slice fibre ferrule alignment fixture for making fibre connections. This fixture comprises a plurality of alignment rods, typically three, held within a spring bracket. At least one of the alignment rods, preferably two in a three-rod splice, includes a "flat", as defined in that patent, extending along the rod from one end for a substantial fraction of the length of the rod. Ferrules are inserted into the splice, with fibre ends opposed. The fibres are aligned by rotating the ferrules relative to each other in the splice fixture by a rotary alignment technique as described in the patent. The "flat" portions on the alignment rods provide an alignment fixture offset said to be necessary for rotary alignment. Once fibre alignment is adjusted for maximum signal transit, it is maintained by establishing a multi-point (preferably three-point) pressure contact of the alignment rods with the ferrule using a spring clip. C.M. Miller US-A-5,212,745 describes a temperature tunable FFP which employs a rotary mechanical splice fixture. The rotary mechanical splice fixture has not been used in FFPs tuned using PZTs.

Signal loss due to wavelength drift and increased insertional loss as a function of temperature can be a significant problem in FFPs. An uncompensated FFP, like that of US-A-5,062,684 or EP-A-0 457 484, can exhibit a relatively large change in cavity length with temperature, of the order 0.05 $\mu$m/°C representing a full FSR (free spectral range) drift over 15°C.

Since PZTs require a higher voltage at higher temperature to maintain a given length, cavity length in PZT-tuned FFPs effectively decreases with increasing temperature (with constant voltage) and these FFPs have negative temperature coefficients. Addition of a material, like aluminium, having a positive temperature coefficient in series with the PZTs compensates for the negative temperature coefficient of the PZTs. C.M. Miller and F.J. Janniello (1990) Electronics Letters 26:2122-2123. In addition, as reported in US-A-5,212,745, the use of controlled thicknesses of positive temperature coefficient adhesives, such as epoxy, when constructing FFPs is important to achieve consistent temperature compensation. PZT-tuned FFPs with appropriate control circuitry can be locked on to a desired wavelength over a wide temperature range (I.P. Kaminow (1987) Electronics Letters 23:1102-1103 and D.A. Fishman et al. (1990) Photonics Technology Letters pp.662-664). To compensate for large FFP temperature variations of cavity length, wavelength control systems can require high voltage power supplies capable of providing 60 volts to maintain a wavelength lock over a temperature range of about 30°C (Fishman et al. supra).

Passive temperature compensation can significantly reduce the voltage requirements for FFP locking circuits so that +/- 12 volt power supplies, such as are conventionally employed in computer systems, can be used.

US-A-5,375,181 describes PZT-tuned FFPs that can be adjusted after their construction by providing ferrule holders and alignment fixtures designed to allow the points of contact between the ferrule along its length and its holder to be changed. This technique significantly improves the production yield of highly accurate, passively compensated FFPs by significantly reducing over or under compensation of the FFPs. These FFPs employ set screw adjustment for fibre alignment.

The present invention provides improved designs for fibre ferrule connectors and ferrule alignment fixtures combining rotary ferrule alignment, controlled epoxy thicknesses and adjustable temperature compensation.

The present invention is defined in the accompanying claims.

The present invention, in one aspect, envisages a ferrule holder comprising: a body having a core to contain the ferrule, a peripheral portion surrounding the core, core and peripheral portion extending the length of the body, a duct being provided through the core to contain the ferrule and being shaped to provide flats for three-point contact between the ferrule and the core and sized to provide a close fit with the ferrule at the passageway flats while allowing rotation of the ferrule in the duct; and means for securing the ferrule in the passageway to establish three-point contact between the ferrule and the holder body.

In a preferred embodiment, the present invention relates to Fibre Fabry-Perot Filters (FFPs) with improved means for alignment of optical fibres. The invention provides ferrule holders with shaped ferrule passageways, as components of FFP alignment fixtures, in which optical fibre ends can be readily aligned using the ferrule rotary alignment method. Ferrule holders for use in temperature compensated FFPs include those fabricated from low temperature coefficient alloys, such as Kovar™. Ferrule holders optionally have a composite structure facilitating temperature compensation required for applications to PZT-tuned FFPs. These ferrule holders have a core and peripheral portion made of materials having different thermal expansion coefficients. The holder core in contact with the ferrule is made of a material having a thermal expansion coefficient substantially matched to that of the ferrule material. In addition, ferrule holders are provided with a means for changing the points of contact between a secured ferrule and its holder which allows wavelength drift as a function of temperature in FFPs to be adjusted.

This invention relates to FFPs with improved means for alignment of optical fibres. Specifically, this invention provides ferrule holders, as components of FFP alignment fixtures, in which optical fibre ends can be readily aligned using the ferrule rotary alignment method. This invention also relates to PZT-tunable FFPs and temperature compensated FFPs with such improved alignment means. The ferrule holders of this invention can also function in fibre optic connectors.

The inventive ferrule holders comprise a body having a shaped longitudinal passageway for receiving and supporting a ferrule. The passageway is shaped along its longitudinal length to closely receive a ferrule and provide flat regions for multi-point, preferably three-point, contact between the ferrule and the holder. The holder also has means for securing the ferrule in the passageway to establish multi-point contact. The body has a core which is the portion of the body in contact with the ferrule and a peripheral portion around the periphery of the core both portions extending the length of the body.

In one embodiment the core and peripheral portion are fabricated from the same material and are a single unit. Temperature compensation of an FFP is achieved by selection of the material for this unitary body. In another embodiment the inventive holders have a composite structure in which the core and peripheral portion of the holder are fabricated from different materials. Temperature compensation of an FFP is achieved by selection of materials for the core and peripheral portions of the body.

In composite-body ferrule holders having two portions made of different materials, the core and peripheral portion are preferably symmetric with respect to the longitudinal axis of the holder. The shaped passageway is in the core of the holder. The axis of the passageway is parallel to and preferably co-linear with the longitudinal axis of the holder. A ferrule secured in the passageway contacts the holder core.

Ferrules are secured in ferrule holders by application of a force substantially perpendicular to the longitudinal axis of the ferrule. The force is applied to the ferrule at a point with respect to the passageway flats to establish multi-point, preferably three-point, contact with the core. Each passageway flat provides a point of perpendicular contact between the ferrule, typically a cylinder, and the body of the holder.

Preferred passageways are shaped to have three flats equiangularly distributed in the core around the circumference of the passageway. Any passageway shapes that allow for three-point contact between the ferrule and passageway are within the scope of this invention. Passageway shapes that minimise the height and width of the holder are preferred. Passageways can, for example, be substantially cylindrical with three relatively small substantially flat portions at the circumference.

More specifically, the ferrule holders of this invention incorporate a means for securing the ferrule in the holder which comprises a means for indirect application of a radially directed force on the ferrule which is substantially directed toward the axis of the ferrule. Application of the radial force is mediated to the ferrule by a ferrule retention element. For example, ferrules can be secured by screws. A tapped screw hole in the body communicates with the ferrule retention element. Radial force is applied by tightening a screw to contact the intermediate ferrule retention element which in turn contacts the ferrule. Application of the radial force urges the ferrule downward in the passageway to establish a secure three-point contact between the ferrule and the passageway flats. The intermediate ferrule retention element can comprise one or more elements. The ferrule retention element can, for example, be a resilient arm that is an integral part of the body core forming a portion of the ferrule passageway or a separate displaceable element retained within a channel adjacent to the ferrule passageway. Alternatively, the ferrule retention means can comprise both a resilient arm and a separate channel element between the arm and the bottom of the tapped hole. In specific embodiments, the inner side of the ferrule retention element provides one of the passageway flats. A ferrule is preferably secured in its holder at a minimum of two points along its length.

To facilitate longitudinal temperature compensation after an FFP is constructed, holders for use in PZT-tuned FFPs are provided with a plurality of means for applying a radial directed force to the ferrule. These means for applying a force to the ferrule also function to secure the ferrule in the holder. The points of application of force are aligned along the length of the holder body parallel to the longitudinal axis of the holder. In specific embodiments, these securing means are a plurality of screws. The longitudinal thermal expansion of the filter is adjustable by changing the points of contact along the length of the ferrule between the ferrule and the holder core. This is accomplished by tightening or loosening holder screws along the length of the ferrule.

PZT-tuned FFPs of this invention comprise two ferrule holders bonded to one or more intermediate PZTs. The FFP optical cavity is formed by insertion of ferrules into each holder. Application of a voltage to the PZT changes the relative axial positions of the ferrules and the optical cavity length to tune the FFP. Ferrule holders of PZT-tuned FFPs have a means for receiving and bonding to a PZT. The ferrule holders of this invention can, for example, comprise brackets extending from the holder for receiving PZTs or can have a flange sized to engage the passageway of a cylindrical PZT. Such a flange facilitates bonding of holders to the PZT and protects the optical cavity from excess adhesive. The holders and PZT are bonded to each other using controlled thicknesses of adhesive, typically epoxy. The ferrule holders of this invention while particularly adapted for PZT-tuned FFPs can generally be employed in any FFP, such as those tuned by varying temperature or refractive index.

For radial temperature compensation of the ferrule holders of this invention, the holder body or the core of that body is fabricated from a material with a thermal expansion coefficient substantially matched to that of the ferrule such that the force on a ferrule secured in the holder does not substantially change as a function of temperature.

Low-expansion coefficient metal alloys having thermal expansion coefficients less than about 7.5 ppm/°C can be used to fabricate the entire body of the ferrule holders to achieve temperature compensation. The particular low-expansion allow that will give a desired level of temperature compensation will depend upon the type of ferrules used and the materials used in other components of the holder.

In composite-body holders it is preferred to use relatively low cost, easily machined metals, such as stainless steel, for the peripheral portion of the holder. Metals having a thermal expansion coefficient substantially higher (more positive) than that of the ferrule material are preferred for the peripheral portion. Metals having thermal expansion coefficients greater than about 10 ppm/°C are preferred in PZT-tuned FFPs in order to compensate for the negative temperature coefficient of the PZTs and provide for longitudinal temperature compensation. The core material is then selected such that when combined in a holder body with the chosen peripheral portion, the force on a ferrule secured in the composite body does not substantially change as a function of temperature.

The present invention will now be further illustrated with reference to the accompanying drawings, in which:

Figure 1 is a schematic of an exemplary FFP fibre ferrule assembly combining a wafered-ferrule and a mirror-ended ferrule to form an optical cavity.

Figure 2 is a cross-sectional view of an exemplary unitary body ferrule holder with shaped passageway for three-point contact of this invention.

Figure 3 is a cross-sectional view of a second ferrule holder of this invention. This ferrule holder has a retention means having a resilient arm and an element separate from the holder body.

Figure 4 is a cross-sectional view of another ferrule holder of this invention. This ferrule holder has a ferrule retention means which is an element separate from the holder body.

Figure 5 is a longitudinal cross-sectional view of an exemplary ferrule holder of this invention.

Figure 6 is a view of an FFP of this invention with a unitary body holder.

Figure 7 is a longitudinal cross-sectional view of an FFP of this invention with ferrule assembly in place.

Figure 8A is a view of an exemplary composite-body ferrule holder of this invention with brackets provided for bonding to PZTs. Figure 8B is a cross-sectional view of the ferrule holder of Figure 8A showing the core and peripheral portions of the holder and a shaped passageway in the core for receiving a ferrule. Figure 8C is an enlarged cross-section of the shaped passageway of Figure 8B.

Figure 9A is a perspective view of the ferrule holder of Figure 8A with ferrule in place showing a flange at the internal end of holder for receiving a sleeve. Figure 9B is a perspective view of an alternate ferrule holder of this invention with ferrule in place showing a flange at the internal end of the holder for receiving a cylindrical PZT.

Figure 10 is a longitudinal cross-section of an exemplary composite-body ferrule holder of this invention with ferrule held in place by tightening two screws of the holder.

Figure 11A is a view of a PZT-tuned FFP of this invention combining two ferrule holders of Figure 8A. Figure 11B is an exploded view of the FFP of Figure 11A.

Figure 12A is a view of a PZT-tuned FFP of this invention combining two ferrule holders of Figure 8B with a cylindrical PZT. Figure 12B is an exploded view of the FFP of Figure 12A.

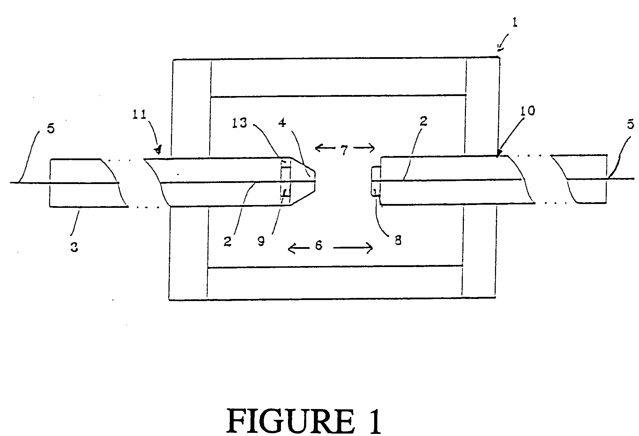

Figure 1 schematically shows a typical FFP filter configuration with two ferrules (10 and 11) aligned within a supporting fixture (1). Each ferrule contains a substantially axial bore (2) along a longitudinal axis for receiving an optical fibre (5). The FFP shown contains a wafered ferrule (11) in combination with a mirror-ended ferrule (10), a single wafered-ferrule assembly. The wafered ferrule has a mirror (9) embedded between the ferrule (3) and the wafer (4). The axial optical fibres of the wafer and the ferrule are aligned and the two elements are bonded with epoxy (13). The embedded mirror (9) and the mirror (8) deposited at the end of ferrule (10) form the resonance cavity of the FFP filter, indicated by 6. In the FFP exemplified in Figure 1, there is a small gap in the optical fibre (7) within the resonance cavity. The length of this gap is varied to tune the wavelength transmitted through the filter. The optical fibres of the ferrules of the FFP are aligned so that an optical signal can traverse the filter. The single-wafered ferrule assembly of Figure 1 has been described in C.M. Miller US-A-5,212,746, which is incorporated by reference herein. The details of construction of FFP ferrule assemblies and in particular the details of preparation of wafered ferrules with embedded mirrors and mirror-ended ferrules are given therein. Alternative FFP ferrule assemblies having a fibre gap within the resonance cavity include those having two mirror-ended ferrules or two wafered ferrules with embedded mirrors. FFP filters can also have a continuous fibre throughout the resonance cavity. In a FFP having a continuous fibre, the filter is tuned by stretching that fibre. Various fibre ferrule configurations can be employed in the FFPs of this invention. The single wafered ferrule design is preferred.

An electromechanically tunable FFP of this invention comprises one or more PZTs bonded between two of the inventive ferrule holders with each ferrule holder providing a passageway for receiving a ferrule and means for securing the ferrules therein in relative alignment to maximise optical signal through the fibres of the ferrules. The ferrule assembly and its optical cavity are formed on insertion and alignment of the ferrules in the holders. The PZTs and the ferrule holders are bonded to each other such that application of a voltage to the PZT changes the optical cavity length of the ferrule assembly. The ferrules are secured in their holders such that the optical cavity can be varied without significant loss of fibre alignment.

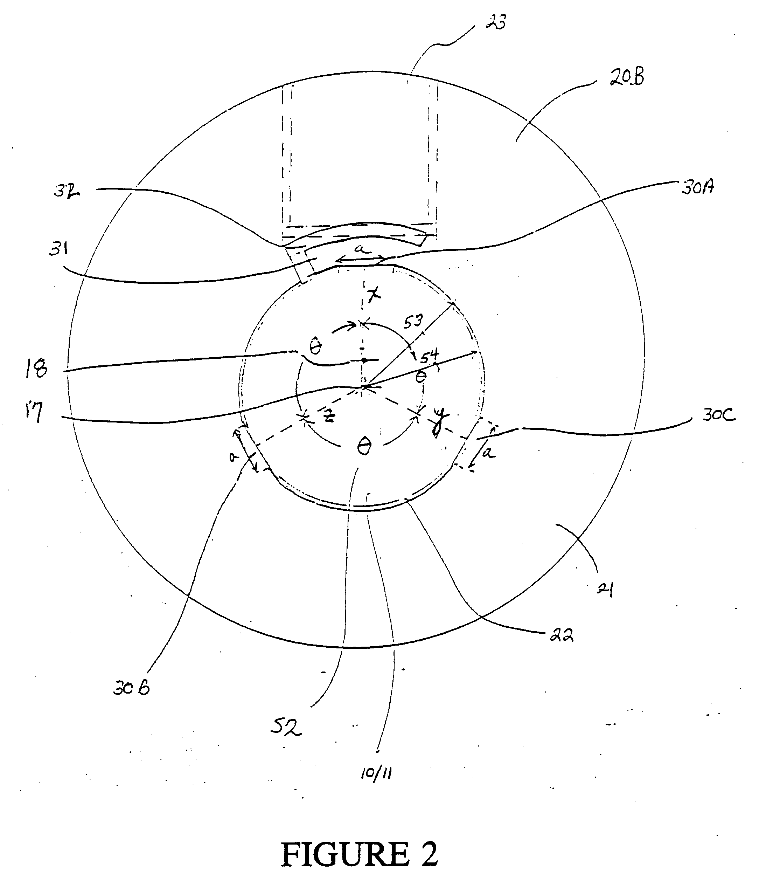

An important feature of the ferrule holders of this invention and FFPs comprising them is that the fibres in the ferrule assembly can be aligned using an incremental rotary alignment technique, such as that used in alignment of rotary mechanical splice fixtures. The inventive holders have a body with a ferrule passageway shaped to include three substantially flat regions so that the ferrule can be secured therein at three points of contact around the circumference of the ferrule. The shaping of the passageway to achieve this three-point contact is illustrated in the radial cross-section of Figure 2. The holder also has a means for securing the ferrule in the passageway to establish three-point contact. This securing means applies a force to the ferrule at one of the three flats of the passageway urging the ferrule to contact the remaining two flats and establishing a three-point contact along the length of the holder passageway.

Figure 2 illustrates the use of a preferred passageway (22) to achieve three-point ferrule contact. This figure shows a ferrule (10 or 11) positioned within a ferrule holder 20B (for use with cylindrical PZTs). The passageway is smooth and its diameter sized slightly larger than that of the ferrule so that the ferrule is closely held in the passageway but can be inserted therein without binding. Ferrule passageway in the holder are typically substantially cylindrical. The contact points between the ferrule and the passageway, 30 A-C, are preferable distributed equiangularly around the circumference of the ferrule with $\Theta$(52)= about 120°.

The ferrule holder has a means for retaining the ferrule in the passageway which comprises a resilient arm 31 extending from the body of the holder intermediate between the bottom of tapped holes 23 and one side of the passageway. The resilient arm 31 is formed by extending a slot 32 outward from the holder passageway 22 under the bottom of the tapped holes. Flat contact 30A is on the inner side (toward the passageway) of this resilient arm. For convenience of machining the body, slot 32 which creates arm 31 can extend the entire longitudinal length of the holder body. Alternatively, a resilient arm can be positioned between the bottom of each screw hole along the length of the passageway. Three-point contact between the ferrule and the passageway along the length of the ferrule is secured by tightening a screw, preferably a cupped screw, into a tapped hole 23. The end of the screw contacts the outer side of the resilient arm 31, displacing it downwardly to contact the ferrule in the passageway. As a result of the downward force applied through the screw the ferrule also contacts the passageway at 30B and 30C. The passageway with its flats and the slot which creates arm 31 are formed by high precision machining.

The passageway of Figure 2 is substantially cylindrical having flats of width (a) for contacting the ferrule. This design is preferred for stability of alignment. The flats of width (a) are preferably equiangularly and symmetrical arrayed around the passageway. The passageway is preferably sized with respect to the ferrule diameter such that the radii of the ferrule cylinder (x, y and z) extending to the contact points are substantially perpendicular to the passageway surface at the contact point. The diameter of the passageway, $d_p$ (53), is slightly larger than that of the ferrule, $d_f$(54), so that the ferrule can be inserted into the passageway without binding. Preferably the width a is selected such that

$$a \geqq 2 \sqrt{d_p^2 - d_f^2}$$

The ferrule retention element in combination with the means for securing a ferrule in the holder can be employed as a means for selectively adjusting the longitudinal thermal expansion coefficient of FFPs comprising the holder. For such an application, the ferrule retention element and/or the securing means, e.g., screws can be made of a high-expansion metal having a thermal expansion coefficient higher, i.e., more positive, than that of the body of the holder.

It will be appreciated by those of ordinary skill in the art that many variations of shaped passageways can be employed to achieve the desired three-point contact with the ferrule. For example, passageways that are triangular in shape or triangular with rounded corners may be employed. Triangular shaped passageways are sized to receive a ferrule and contact it at each of the three sides of the triangle. It will also be readily apparent that the passageways can be shaped such that an inserted ferrule will make more than three contacts at flats therein. Such multi-point contact schemes which incorporate a basic three-point contact scheme are within the scope of the present invention, but are not preferred.

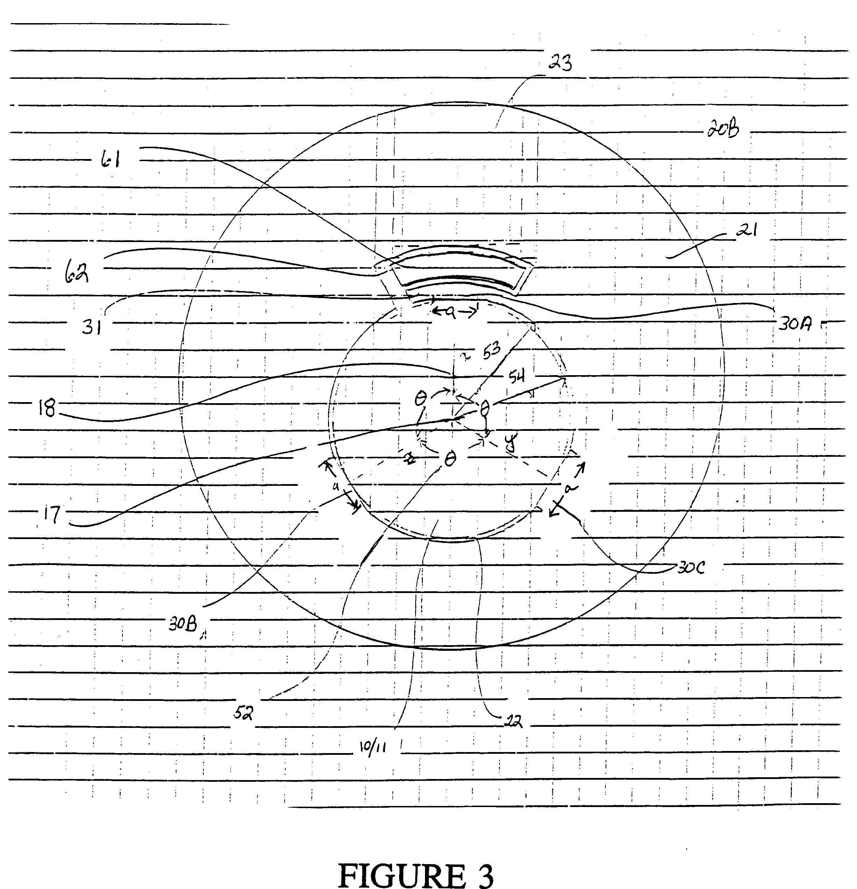

Figure 3 illustrates a ferrule holder having essentially the same passageway shape of Figure 2 but having an alternate ferrule retention means. A channel 62 is introduced in the holder adjacent to the ferrule passageway for receiving a separate element 61 which is retained in the channel. The channel is positioned under the tapped holes 23 such that a screw tightened into the hold will contact the element 61 in the channel displacing it downwardly. The channel element 61 in turn contacts the resilient arm 31 and displaces it downwardly to contact the ferrule in the passageway. The application of a radial force, by means of the screw and mediated through the channel element 61 and the resilient arm 31 secures the ferrule in a three-point contact within the passageway. Channel elements and passageways are formed by high precision machining.

The channel element can be constructed of the same material as the holder and arm. Alternatively, as will be discussed below the material of the channel element can be selected to have a thermal expansion coefficient to compensate for any mismatch between the thermal expansion coefficients of the ferrules and the holder body. Further, the channel element in combination with the means for securing the ferrules within the holder can provide a means for selectively adjusting the thermal expansion coefficient of FFPs comprising the holder after the FFPs have been constructed. For such an application the channel element can be made of a material, such as a high-expansion metal having thermal expansion coefficient higher, i.e. more positive, than that of the body of the ferrule holder.

For convenience of machining, channel 62 and the channel element 61 therein are shown to extend the length of the ferrule holder. Alternatively, a channel and channel element can be positioned under each tapped hole along the length of the ferrule. The adjustable thermal coefficient feature requires the channel and channel element to extend the length of the ferrule.

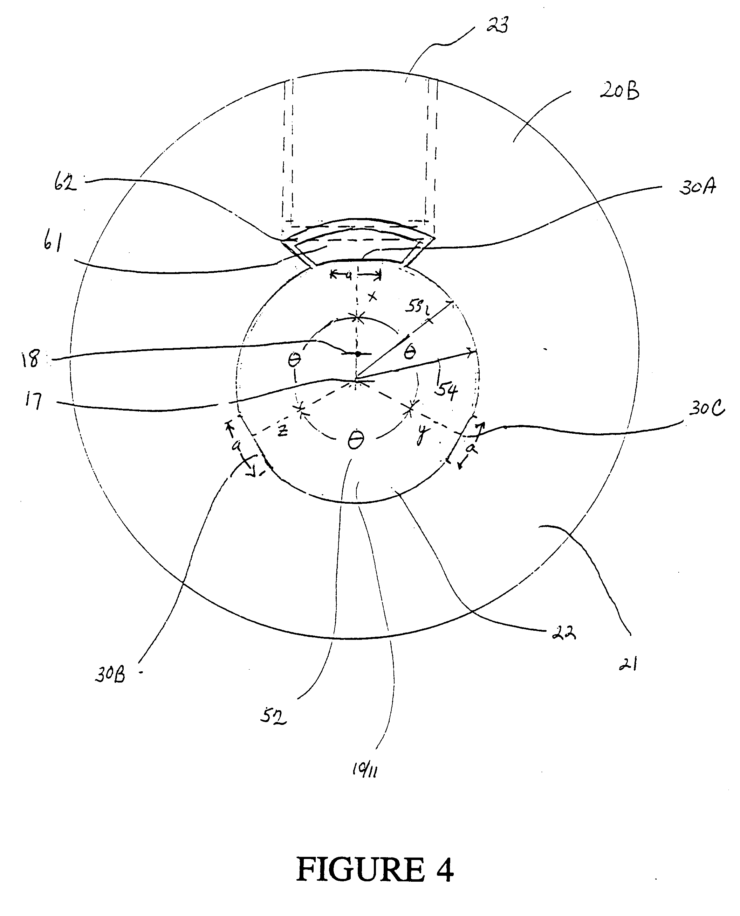

Figure 4 illustrates a ferrule holder having the same passageway shape of Figure 2 but having another alternate ferrule retention means, a separate element 61, positioned intermediate between the bottom of the tapped holes 23 and the ferrule in the passageway. Element 61 is separate from the body of the ferrule holder positioned and held within retaining channel 62 on the holder. Element 61 can be made of the same or different material than the body of the holder. This channel and its element are sized and shaped with respect to each other such that the element is held within the channel but can be displaced downwardly by applying a radial force, such as by a tightened screw into the tapped hole. On displacement the element contacts the ferrule in the passageway urging it downward to establish contact with flats 30B and 30C. The inner side of the ferrule retention element 61 contains flat portion 30A which forms a flat surface of the passageway. Again for convenience of machining, channel 62 and the ferrule retention element 61 therein extend the length of the ferrule holder. Alternatively, a channel and ferrule retention element can be positioned under each tapped hole along the length of the ferrule.

The channel and ferrule retention element of Figure 4 can be combined with the ferrule securing means to provide for selective adjustment of the longitudinal thermal expansion coefficient of the holder and any FFP constructed therefrom. This adjustment feature requires that the element be made of a material having a thermal expansion coefficient higher than that of the holder body, i.e. more positive. This feature also requires that the channel and element extend the length of the ferrule. This feature allows selective adjustment of the thermal expansion coefficient of an FFP after it has been constructed.

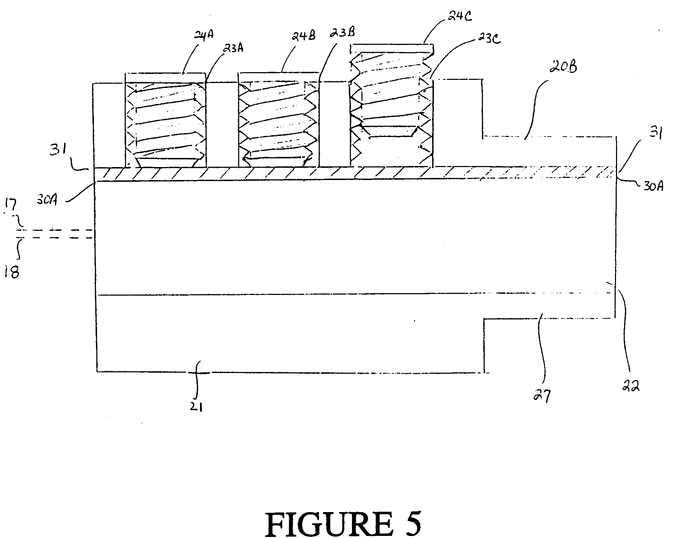

In Figures 2-4 the longitudinal axis of the passageway 17 is offset from the axis of the holder 18, the offset between the axes being 19 (as shown in Figure 5). Offsetting the passageway axis provides more room for tapping screw holes 23 and creation of arm 31 or channel 62. Designs having this offset are more compact and are preferred for construction of miniaturised FFPs.

Figure 5 is a longitudinal cross-section of a ferrule holder of this invention. Passageway 22 extends the length of the holder body (21) and the means for securing a ferrule in the holder is a plurality of tapped holes 23(A-C) with screws 24 (A-C), three screws are shown, in a line along the length of the holder. The ferrule retention means comprising an arm 31 formed by slot 32 are shown. The screws 24 are shown with cupped heads which are preferred. The cross-section is shown for the ferrule holder of Figure 2. However, cross-sections of exemplary holders of all of Figures 2-4 are analogous to Figure 5.

Figure 5 also illustrates a means for receiving a PZT, flange 27, at the internal longitudinal end (26) of the holder around the circumference of the internal passageway exit (28) of the holder passageway. This flange is designed to fit inside the passageway of a cylindrical PZT to keep adhesive out of the optical cavity. The outer diameter of the flange is thus sized to receive a cylindrical PZT. The flange is inserted into the cylindrical passageway along the axis of the PZT. Cylindrical PZTs elongate along this longitudinal axis.

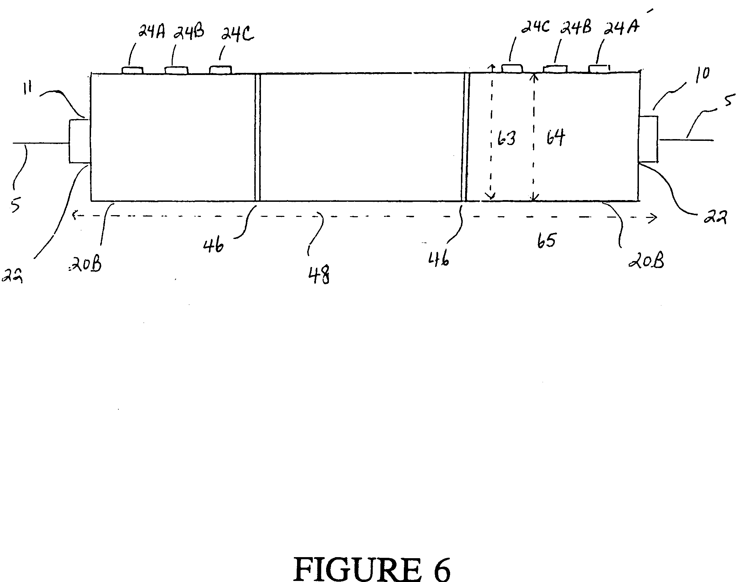

An FFP alignment fixture of this invention is constructed by bonding, preferably with controlled-thickness epoxy bonds, 46, two ferrule holders 20B, via their internal ends (26), to either side of a cylindrical PZT 48, as schematically shown in Figure 6. Adhesive thickness (46) is controlled by the use of gauge wires as described in detail below.

Note that in Figure 6 the height of the PZT, i.e. its diameter to the top of the screw heads is indicated, 63. In miniaturised FFPs the height is about 6.8 mm or less. Using the FFP designs herein, miniaturised FFPs having dimensions of less than or equal to about 6.8 mm in height(63), 10 mm in width (64) and 30 mm in length (65) have been constructed.

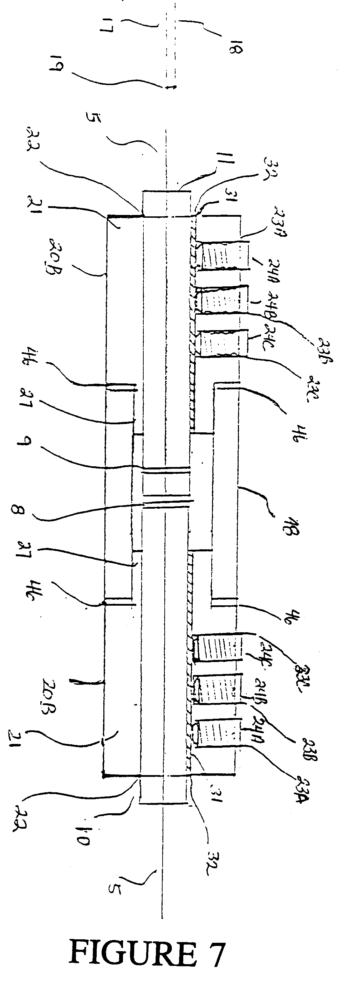

Figure 7 illustrates a longitudinal cross-section of an FFP of this invention with a ferrule assembly, ferrules 10 and 11, in place forming an optical cavity between mirrors 8 and 9. As indicated in the figure, the internal ends of the ferrules extend into the passageway of the PZT 48. Application of a voltage to the cylindrical PZT elongates the PZT and as a result increases the optical cavity length of the FFP. Variation of the optical cavity length is used to tune the wavelength of the filter.

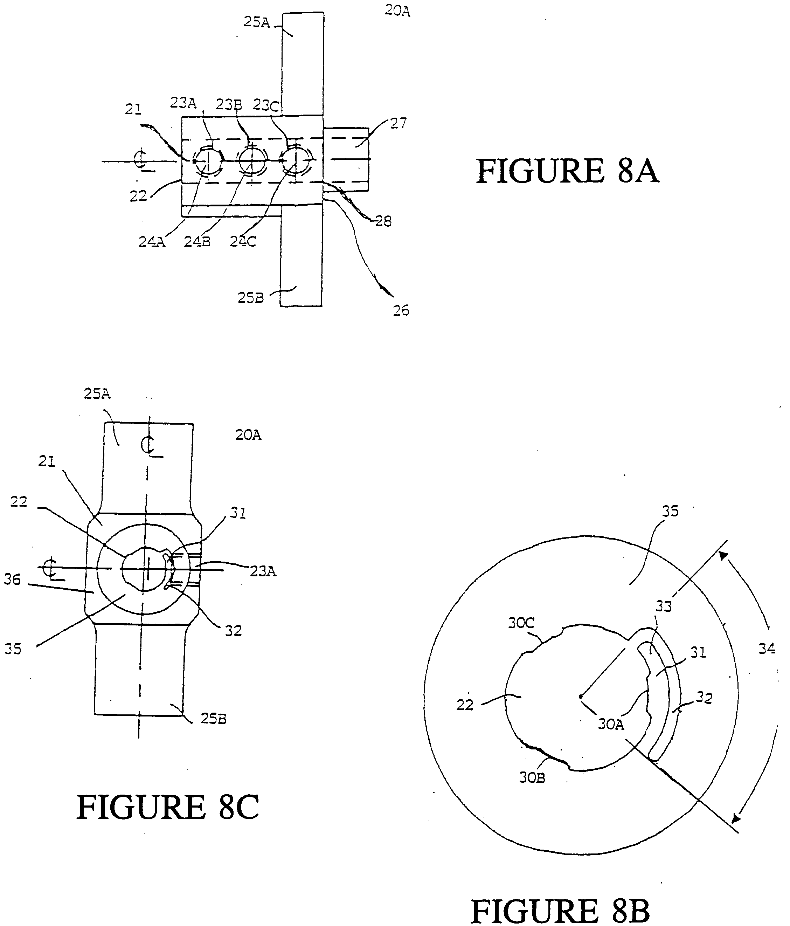

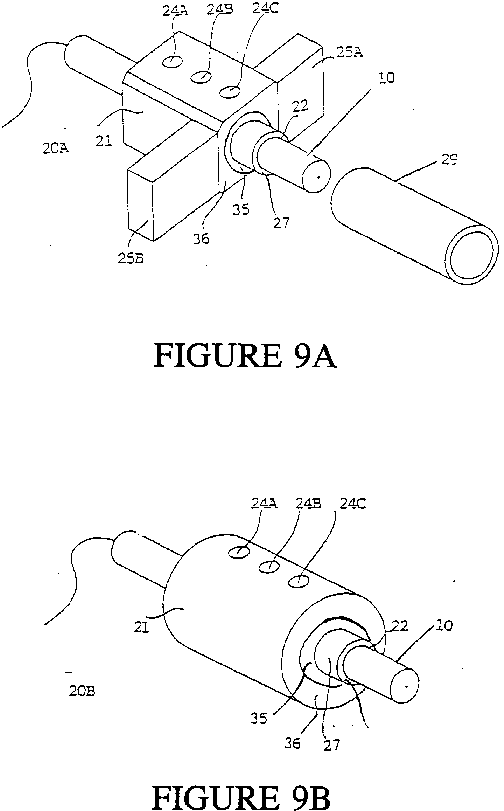

Figures 8A-8C and 9 show different views of an exemplary ferrule holder with a composite body. The shaped passageway and ferrule retention means in the holder of Figures 8A-8C and 9 is similar to that illustrated in the unitary body holder of Figure 2. Figure 8A is a top-view of ferrule holder (20A) having a composite body (21) with a passageway (22) through its length generally shaped and sized for closely receiving a fibre ferrule.

The holder includes a plurality of tapped holes (23A-C) for screws (24A-C) which can be tightened to secure the ferrule in the holder. Holder 20A has brackets 25A and 25B extending outward from the body positioned generally toward the internal end (26) of the holder for bonding to rectangular PZTs. The holder optionally has a flange (27) extending around the passageway exit (28) at the internal end and sized to receive a protective sleeve.

The holder passageway 22, like that of Figure 2, includes three substantially flat regions (30A-C) which provide three points of contact around the circumference of the ferrule. A force substantially perpendicular to the ferrule axis is applied to a ferrule in the passageway to secure the ferrule in the passageway and establish three-point contact. The force is applied directly to the ferrule or preferably indirectly through an intermediate ferrule retention element (31), a resilient arm with flat (30A) on its inner side (toward the passageway).

Figure 8C is a lateral cross-section of the holder showing the core (35) and peripheral portion (36) of the body. The core is in direct contact with the peripheral portion of the body along the length of the holder. Passageway (22) is formed in the core by high precision machining. Resilient arm (31) is a part of the core also formed by high precision machining. A ferrule inserted in the passageway (22) contacts the material of the core. Tapped holes (23A-C, Figure 8C) extend from the outer surface of the body through the peripheral portion into the core to intersect with the channel formed by slot (32).

The resilient arm (31) in Figure 8B and 8C is shown approximately centred under the tapped screw holes. The flat 30A is also shown approximately centred on the arm under the tapped holes. The flat in the ferrule retention element is preferably aligned with the point of application of the radial force, i.e., aligned under the screw. However, the arm or other retention element itself need not be centred under the screw. For example, the flat can be positioned toward the free-end of the arm (33) and the screw aligned over the flat. In the specific arm configuration of Figure 8B, it was found preferable to improve flexibility and durability of the arm (31) that angle (34), which defines the length of the slot (32) and arm (31), be about 90°.

The composite body of the holder in Figure 8A-8C is formed, for example, by press fitting, as is understood in the art, a rod of core material into an appropriately sized cavity in a piece of peripheral portion material to form a composite precursor. The composite material is high precision machined using methods appropriate to the selected materials to shape the holder and introduce the desired shaped passageway and ferrule retention element. Press fitting is particularly appropriate for making metal composite precursors, such as low-expansion metal cores in stainless steel.

Figure 9A is a perspective view of holder 20A of Figure 8A showing a ferrule (10) in place in the holder. The ferrule end face containing the fibre end exits through flange (27). Also shown is protective sleeve (29) sized to engage the flange. This holder has brackets 25A and 25B for receiving and bonding to a PZT. The brackets and flange in the exemplified holder are integrally formed with the composite holder body. In the exemplified holder, the brackets are formed from the same material as the peripheral portion. Figure 9B is a perspective view of an alternative ferrule holder (20B) of this invention designed for use with cylindrical PZTs. In holder 20B, flange (27) is sized to engage and receive the cylindrical passageway of the PZT. In both exemplified holders of Figures 9A and 9B, flange (37) is integrally formed with the holder body by machining the composite precursor, thus the inner portion of the flange (37) in contact with the ferrule is made of core material. Dependent upon the relative sizes of the core and peripheral portions of the body, the flange will have a core and may have a peripheral portion.

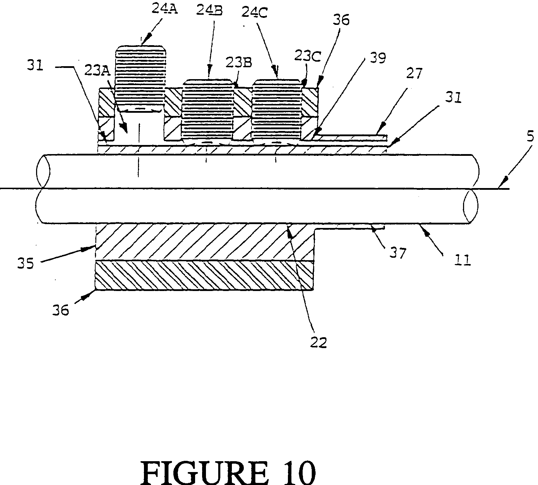

Figure 10 is a longitudinal cross-section of a composite-body ferrule holder (20A or 20B) with ferrule (10) in place. This view shows the core (35) and peripheral (36) portion of the holder in relation to the tapped holes (23A-C) and flange (27). This view also shows channel (39), formed by slot (32 in Figure 2B and 2C), extending the length of the holder.

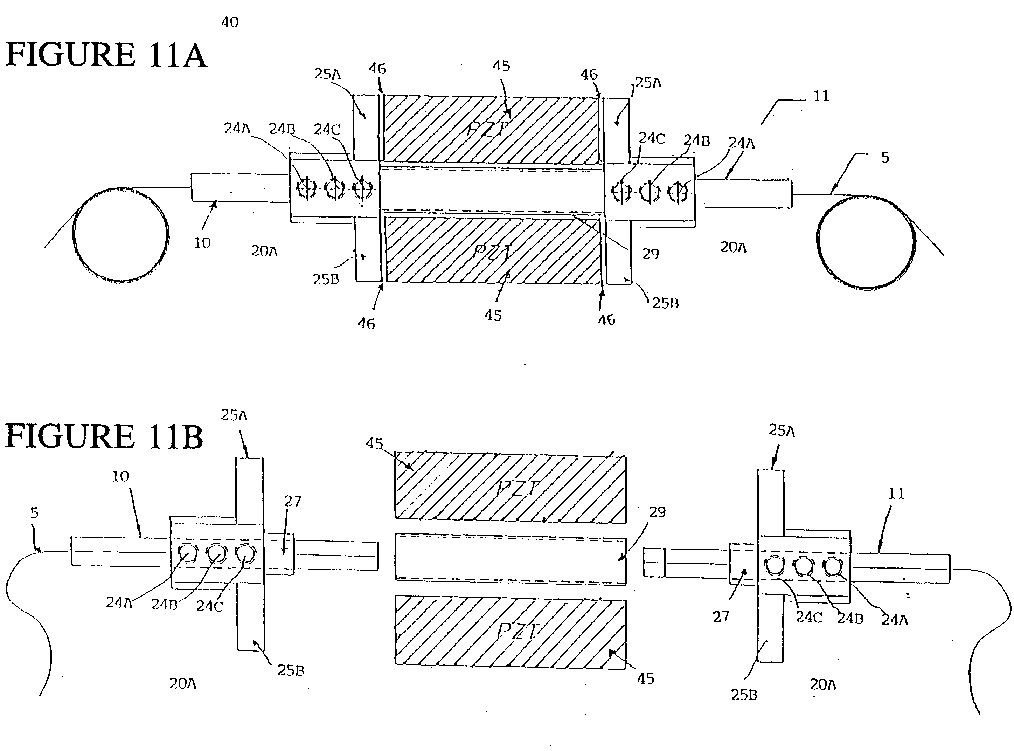

Figure 11A is a top-view of a PZT-tuned FFP (40) of this invention having two ferrule holders (20A) of Figure 9A. Figure 11B is an exploded view of the same FFP showing the component parts thereof. Two rectangular PZTs (45) are bonded between aligned holder brackets of two ferrule holders using controlled epoxy thicknesses (46) as described below. Sleeve (29) extends between the holders and engages the flanges (27) of both holders. The optical cavity is formed between aligned ferrules (10) and (11) within the sleeve. This optional sleeve protects the optical cavity from dust and other particles from the surrounding environment and in particular excludes any excess epoxy that might accidentally be introduced into the cavity during construction of the FFP. Screws(24A-C) are aligned along the length of each holder. Application of a voltage to the PZTs changes the optical cavity length and tunes the FFP.

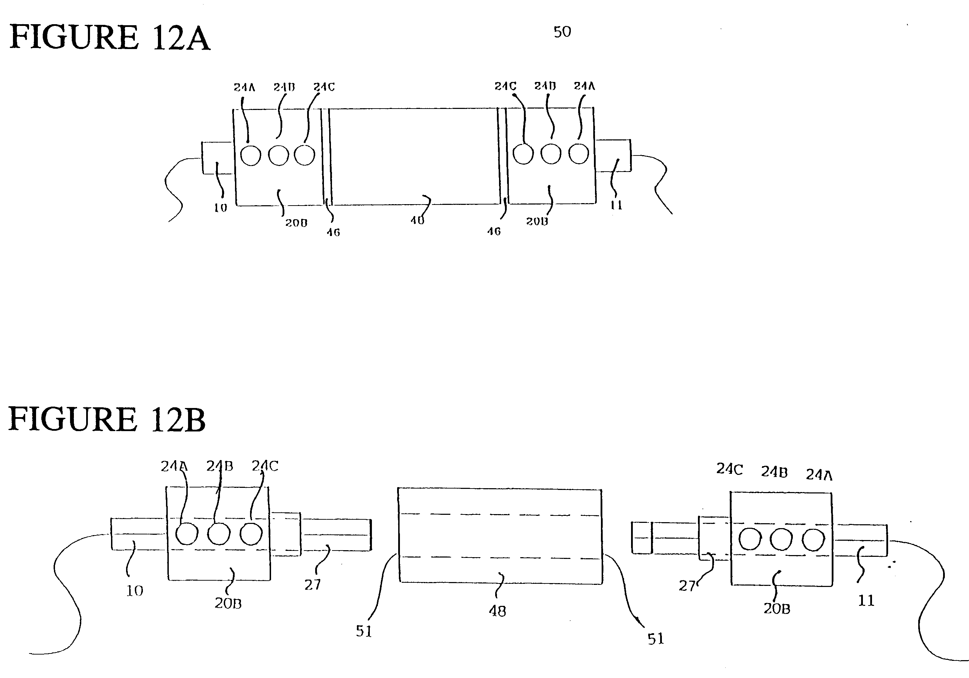

Figure 12A is a top-view of a PZT-tuned FFP (50) of this invention having two ferrule holders of Figure 9B. Figure 12B is an exploded view of the same FFP showing the component parts thereof. A single cylindrical PZT (48) is bonded between holders 20B using controlled thicknesses of epoxy (46). The flanges (27) of both holders engage the passageway (51) of the PZT. The ferrules are inserted in the PZT passageway to form the optical cavity. Screws (24A-C) of the two holders are substantially aligned.

In the FFPs of Figures 7, 11A and 12A, the screws (24A-C) provide a plurality of adjustable means for applying a radially directed force to the ferrule in the passageway and establishing contact points between the ferrule and the holder core. As previously described in US-A-application 07/929,839, changing the points of contact along the length of a ferrule allows selective adjustment of the longitudinal thermal expansion coefficient of an FFP to minimise wavelength drift. The means for securing the ferrule in the holder thus also provide for temperature coefficient adjustment after the filter has been constructed. In the holders of this invention, it is preferred that a ferrule is secured at a minimum of two points along its length. Within this constraint, the points of contact along the ferrule can be adjusted as needed. For example, in the three-screw holders of Figures 7, 11A and 12A, the middle screw (24B) is always tightened securing the ferrule and adjustments in temperature coefficient and wavelength drift are made by tightening either 24A or 24C. Composite body ferrule holders are preferred for FFPs with adjustable temperature coefficients.

Ferrule holders can be made of various metals and have typically been made of stainless steel. Note that different types of stainless steel have different thermal expansion coefficients. For general purposes low-expansion coefficient (10.3 ppm/°C) stainless steel is preferred. Ferrules are typically fabricated from Pyrex™, but may also be made of other types of glass or quartz which all have relatively low positive temperature coefficients. In certain temperature compensated FFPs of this invention, the ferrule holders are fabricated from low-expansion metal alloys, i.e. those having thermal expansion coefficients less than about 7.5 ppm/°C, dependent upon the type of ferrule material used. The amount of epoxy required to balance the temperature coefficient of a filter will be sensitive to low temperature coefficient materials present in large amounts in the support and fixture or even small amounts of high temperature coefficient materials used in the support and fixture. The thickness of the epoxy joints in the FFP must also be such that the PZT is substantially rigidly bonded between the ferrule holders.

For many applications FFPs must be temperature compensated to minimise the undesired effect of ambient temperature changes on cavity length (longitudinal effect). Insertional loss through fibre misalignment can also be caused by ambient temperature changes (radial effect). Detriment to alignment is minimised in FFPs if the force on the ferrule within the holder remains substantially constant as a function of temperature.

In the PZT-tuned FFPs of this invention temperature compensation is achieved in part by the use of controlled thickness of positive thermal coefficient adhesive, such as epoxy, in the bonds between the holders and the PZT, as will be described below. Insertional loss, i.e. loss of alignment, with temperature is minimised in the inventive FFPs by choice of materials for the holder and its component parts.

Fibre ferrules are typically made from low-expansion glass like, Pyrex™. Quartz, other glasses and ceramics can also be used to fabricate fibre ferrules.

Low-expansion metal alloys, i.e. those having a thermal expansion coefficient of about 7.5 ppm/°C or less are suitable materials for preparation of unitary body ferrule holders of this invention. Particularly suitable low-expansion alloys are those containing nickel and iron, such as Invar™, ternary alloys of nickel, iron and cobalt, such as Kovar™, or ternary alloys of iron, cobalt and chromium, such as Elinvar™, all as described in M.A. Hunter (1961) Metals Handbook, American Society of Metals 8th Ed. (Taylor Lyman, ed.) Volume 1, p.816-819.

For example, a low-expansion alloy having a thermal expansion coefficient of about 3.6 ppm/°C (the thermal expansion coefficient of Pyrex™) would seem most preferred for use with Pyrex™ ferrules. This is true, however, only if the entire holder including the screws can be fabricated from such a low-expansion alloy. While it is possible to make an alloy with a desired low thermal expansion coefficient by variation of its component elements as described in Hunter (1961), supra it is more efficient and less expensive to employ commercially available alloys, like Kovar™ or Invar™, which have thermal expansion coefficients somewhat different than that of quartz. Other components of the holder, including the screws can be adapted to achieve the desired temperature compensation.

It has been found empirically that a temperature compensated PZT-tuned FFP for Pyrex™ can be made using a unitary body ferrule holder of this invention fabricated with Kovar™ and employing low-expansion stainless screws. The ferrule retention means was provided as a resilient Kovar™ arm extending from the holder body. The mismatch between the thermal expansion coefficient of Kovar™ (about 5 ppm/°C) and Pyrex™ (3.6 ppm/°C) was compensated by use of screws of somewhat higher thermal coefficient material (stainless steel of about 10 ppm/°C). If an alloy of slightly lower expansion coefficient were employed for a holder for Pyrex™ ferrules, the desired balance would be obtained by using screws having a slightly lower expansion coefficient than stainless steel.

Such general principles can be used to select appropriate materials for ferrule holders and components to achieve temperature compensation. The temperature compensation achieved by any particular selection of materials for holders and screws can be readily tested. A test filter is fabricated from materials selected according to the general principles discussed above. The ferrules are secured in the holder at room temperature and the force required to rotate a ferrule is measured. In preferred temperature compensated FFPs, the force required to rotate the ferrule will remain substantially the same (i.e., with less than about ±10% change) as the temperature is changed over a range of temperature from about -25°C to +85° C. Preferred temperature compensated FFPs are those in which the change in the force required to rotate the ferrule is minimised as a function of temperature.

In general, satisfactory temperature compensation of FFPs can be achieved if the ferrule unitary holder body is fabricated of material having a thermal expansion coefficient within a factor of two higher or lower than that of the ferrule material. Over this range choices of materials for the ferrule retention element and or screws can be made to satisfactorily compensate for mismatches in thermal expansion coefficients of the body and the ferrules. Preferred ferrule materials for temperature compensated FFPs are those which have a thermal expansion coefficient that differs from that of the ferrule material by less than about 50%, e.g. for Pyrex™ ferrule holders made of materials having a thermal expansion coefficient between about 5.4 and 1.8 ppm/°C are preferred.

Temperature compensated FFPs of this invention having a holder like that of Figure 2, having Pyrex™ ferrules, Kovar™ holder bodies and employing low-expansion (10.3 ppm/°C) stainless steel screws display wavelength drift of less than about 1 FSR/100°C in the range -20° to +85°C. These FFPs also display insertional loss after multiple temperature cycles of the same temperature range of less than 1 Db. Further, these FFPs require locking voltages of magnitude less than about +/-5 volts to maintain a desired wavelength over the entire temperature range tested. Standard wavelength locking techniques were employed.

In the PZT-tuned FFPs of this invention having composite body holders, temperature compensation is achieved by selection of core and peripheral materials and by the use of controlled thickness of positive thermal coefficient adhesive, such as epoxy, in the bonds between the holders and the PZT, as will be described below. A holder which provides substantially constant force on a ferrule as a function of temperature is achieved by choice of holder core material. Optical cavity length variation in PZT-tuned FFP is minimised by choice of holder materials and control of epoxy layers to balance the negative temperature coefficient of any PZTs. The ability to adjust the longitudinal contact points between the ferrule and the holder allows finer tuning of wavelength drift with temperature after an FFP is constructed.

Fibre ferrules are typically made from low-expansion glass like, Pyrex™. Quartz, other glasses and ceramics can also be used to fabricate fibre ferrules. The peripheral portion of the holder is preferably made from a readily machinable metal, such as stainless steel. Such metals typically have thermal expansion coefficients, greater than or equal to about 10 ppm/°C, significantly higher than those of typical ferrule materials. Low-expansion metal alloys, i.e. those having a thermal expansion coefficient of about 8.0 ppm/°C or less are suitable materials for preparation of core regions of the ferrule holders of this invention. Particularly suitable low-expansion alloys are those containing nickel and iron, such as Invar™, ternary alloys of nickel, iron and cobalt, such as Kovar™, or ternary alloys of iron, cobalt and chromium, such as Elinvar™, all as described in M.A. Hunter (1961) supra. As is understood in the art, the thermal expansion coefficients of low-expansion alloys may vary dependent upon the processing used to make the alloy. The thermal expansion coefficients of a commercially-available material at a given temperature can typically be obtained from the manufacturer. Alternatively, thermal expansion coefficients of a given material at a given temperature can be determined empirically by methods well-known in the art.

Knowledge of exact thermal expansion coefficients is not necessary to practice this invention. Materials for the core and peripheral portions and the relative cross-sectional areas of each material can be selected empirically by measuring the variation in force with temperature on a ferrule secured within a test holder, as described above.

It has been found empirically that a radially temperature compensated PZT-tuned FFP for Pyrex™ ($\alpha$ about 34 ppm/°C) ferrules can be made using a ferrule holder of Figure 2A-C having a core of Kovar™ ($\alpha$ about 5-6 ppm/°C) and a peripheral portion of low-expansion stainless steel ($\alpha$ about 10 ppm/°C) provided with stainless steel screws. The relative radial cross-sectional areas of Kovar™ core to the stainless steel peripheral portion in this holder were about 1:1. In a Kovar™-stainless steel holder of Figure 2A-C, good thermal behaviour was displayed with about 0.21" diameter Kovar™ core in a 0.25" x 0.25" (length x width) peripheral portion with a core passageway diameter of about 0.10".

As is known in the art, thermal expansion of composite materials depends generally on the shapes and relative dimensions of the components of the composite and the thermal expansion coefficients of the components. In the composite holder of this invention, the core must have sufficiently large cross-sectional area to accommodate the ferrule passageway and ferrule retention element. The peripheral portion must have a positive thermal expansion coefficient sufficiently high and its cross-sectional area in the holder sufficiently large for longitudinal temperature compensation in the FFP filter in which it will be used. Furthermore, the relative sizes of the two regions is limited by the desired outside dimensions of the holder and FFP. Within these constraints the relative cross-sectional area of the core and peripheral portion can be varied. The cross-sectional areas of the core to the peripheral portion are typically within a factor of 10 or less of each other, i.e. the relative cross-sectional areas range from 1:10 to 10:1. Preferably the cross-sectional areas are within a factor of 5 or less from each other, i.e. relative cross-sectional areas from 1:5 to 5:1. More preferably the relative cross-sectional areas will range from 1:3 to 3:1.

Such general principles can be used to select appropriate materials for the core and peripheral portions of the holder to achieve temperature compensation. The temperature compensation achieved by any particular selection of materials for holders and screws and for the relative sizes of the core and peripheral portions of the holder can be readily tested. A test filter is fabricated from materials selected according to the general principles discussed above.

In general, satisfactory radial temperature compensation of FFPs can be achieved if the core is a material having a thermal expansion coefficient within a factor of two higher or lower than that of the ferrule material. Over this range, the relative cross-sectional areas of the core and peripheral portion as well as choice of materials for ferrule retention elements and or screws can be made to satisfactorily compensate force on the ferrule in the holder.

In general, the passageways in the ferrule holders of this invention are shaped by any high precision machining techniques appropriate for the material chosen. Low-expansion alloys can be difficult to machine, however, electron discharge machining techniques, as are well-known in the art, can be employed to introduce the desired shaped passageways, channels and slots in the inventive holders.

The details of construction of ferrules, and ferrule assemblies, the deposition of mirrors, and the characteristics of various fibre ferrule configurations for FFPs are well-known in the art and have also been discussed, for example, in U.S. patents 5,212,745, 5,062,684, and 4,861,136. For low-loss, high-finesse FFPs, it has been found important to employ high precision polishing of fibre ends to achieve high precision fibre end perpendicularity to the fibre core (preferably 0.02° or less). Opposing ends of ferrules forming the optical cavity are preferably polished to be essentially parallel. FFP mirrors have typically been produced by deposition of multiple layers of quarter-wavelength stacks of Si/SiO$_2$. Improved low-loss FFPs can be produced by use of mirrors formed by deposition of multiple layers of TiO$_2$/SiO$_2$, as described in J. Stone and L.W. Stulz (1991) Electronics Letts. 27(24):2239-40.

The term fibre alignment is used herein to refer to alignment of optical fibres through the ferrule assembly of the FFP. Fibres are aligned to maximise optical signal through the filter. To achieve a low-loss filter, high precision, close tolerance alignment of the optical fibres is necessary. The rotary alignment method which has been described in US-A-4,545,644 for active alignment of fibres in optical fibre splice provides high precision alignment needed for low-loss filters. The method as described therein, which is incorporated by reference herein, is applied to align the fibres of the FFPs of this invention. Briefly, the method involves step-wise rotation of the ferrules in the fixture relative to each other to achieve maximum overlap of the fibres as measured by maximum signal (or minimum scattering) through the filter. As applied to the inventive FFPs, the ferrules are inserted into the ferrule holders and partially secured therein to provide some resistance to rotation. Optical signal through the filter is monitored while one ferrule is rotated in the holder until a maximum signal is obtained. The other ferrule is then rotated in the holder until a second maximum is obtained. The first ferrule is then rotated to achieve a third maximum. This step wise process is continued until no further signal improvement is observed. As described in US-A-No. 4,545,644, to avoid local maxima and expedite the alignment process, one ferrule can be intentionally set off the position of maximum output and the other ferrule rotated to obtain a maximum. After the desired alignment is obtained the ferrules are tightly secured within the holders. The three-point contact that is obtained in the holders of this invention provides more stable alignment compared to methods in which set screws are use to adjust the position of the ferrule within the holder. The three-point contact essentially secures the ferrules in a V-groove substantially preventing rotation of the ferrules in the holder and thus preserving fibre alignment. Furthermore, this means of alignment and of securing the ferrules in alignment in the FFP retains high precision alignment but allows longitudinal variation in the cavity length so that the filter can be tuned.

The rotary alignment technique as described in US patent 4,545,644 requires an alignment fixture offset. This feature increases the offset between the fibre axes of the two ferrules in the rotary mechanical splice fixture to facilitate rotary alignment of ferrules. It has been found empirically in the PZT-tuned FFPs of this invention that there is no need to incorporate such a fixture offset to increase the offset between fibre axes in the FFP. Typically, there is sufficient fibre axis offset resulting from ferrule mismatch, variations in individually machined parts and variations resulting from bonding the holders to the PZT to allow the rotary alignment technique to be use. In the rare event that the fibre axes offset is not sufficient in an FFP, simply substituting one of the ferrules for another will generate the required offset.

In general, any means for selectively applying a radial force to the ferrule directly or indirectly *via* the ferrule retention element can be employed. Screws provide a simple practical means for applying such a force. Screws employed in the FFPs of this invention are preferably sealed with a silicon thread sealer to keep moisture out of the FFP. Screws employed can be made of the same material as the core or peripheral portion of the holder. For example, Kovar™ screws can be employed with holders having Kovar™ bodies or Kovar™ cores. As noted above, the material selected for screws can affect temperature compensation. Screws with cupped-ends which tightly grip the surface against which they are tightened have been used. Any sharp edges of cupped screws may be blunted to minimise damage to the ferrule retention element. Other types of fasteners, particularly spring fasteners can be readily adapted to provide the desired radial force to secure ferrules in holders.

FFPs of this invention can employ piezoelectric transducers which transform electrical energy into mechanical energy by utilising the piezoelectric longitudinal effect. PZTs elongate along one axis on application of an electric field and the elongation is proportional to the applied field. Electrostrictive materials which elongate on application of a field, but in which the elongation is proportional to the square of the applied field can also be employed in the FFPs of this invention to vary optical cavity length. Like PZTs, electrostrictive materials will display negative temperature coefficients, the effect of which can be compensated as described herein specifically for PZT-tuned FFPs.

Temperature compensated FFPs using the ferrule holders of this invention are constructed by first determining the amount of positive temperature coefficient adhesive in PZT to holder joints required to balance the negative temperature coefficient of the PZT. This is done in a test filter as described in US-A-5,289,552. The thickness of the adhesive layers between the ends of the PZT and the brackets or internal ends of each ferrule holder is controlled, for example, by inserting gauge wires as spacers between components to be bonded. The thickness of the epoxy layer required in a given type of FFP depends upon the specific fixture design and size, the types of material used for ferrules and in the core and peripheral portions of the holder, the relative amounts of different materials, the relative placement of materials in the FFP and the size and type of PZTs. The thickness of the epoxy layers used to bond the PZTs to the brackets or holder end in a test FFP is varied in test filters until wavelength drift as a function of temperature is minimised. Preferably, epoxy thicknesses are adjusted in the test filter so that the wavelength drift of the filter is equal to or less than 0.1 FSR/15°C. FFPs of the same design as the test FFP are then constructed using the experimentally determined epoxy thicknesses which gave a minimum temperature drift in the test FFP.

To control epoxy thickness, a gauge wire is inserted between the end of the PZT and the bracket to which it is to be bonded. A drop of epoxy is applied in the joint sufficient to cover the entire area of the joint. The area of the joint typically corresponds to the area of the end of the PZT. Uniform pressure is applied across the joint and excess epoxy which is squeezed out of the joint is removed. A uniform controlled thickness of epoxy results after curing of the epoxy. It has been found that steel gauge wires are suitable spacers for forming the desired controlled thickness epoxy layers. It is not necessarily the case that the thicknesses of the epoxy layers is equal to the diameter of the gauge wire. However, the use of the same gauge of wire will give reproducibly controlled thicknesses of epoxy in FFP joints. This method employing experimentally selected steel gauge wires and the application of uniform manual force was found to result in FFPs with substantially reproducible low temperature coefficients. Consistency in manufacture may be further improved by application of uniform mechanical force across the joints, such as by the application of adjustable table clamps or like devices.

The type of epoxy used is selected such that a layer that is thick enough to balance the negative temperature coefficient of the PZTs is thick enough to provide a good bond.

In cases where epoxy layers greater than about 10 μm thick are required, it is preferred to employ multiple thinner layers of epoxy separated by spacers to bond PZTs between ferrule holders. These multiple thinner layers of epoxy are more durable than a single thicker layer of epoxy. Multiple controlled-thickness layers are formed by using multiple gauge wires between aluminium washers, for example, as spacers.

In general, any means for obtaining a controlled thickness of adhesive (or a controlled amount of adhesive) in a joint can be employed in the construction of temperature compensated filters of this invention. For example, the face of the holder to which the PZT will be bonded can be provided with a precisely machined groove for receiving and positioning the PZT. In addition, one or more spacing ridges can be precisely machined on the face of the support bracket to serve as a non-deformable spacer for generating an epoxy joint of uniform thickness.

FFPs of this invention are conveniently constructed by inserting a straight smooth rod of ferrule material through the passageways of the component ferrule holders and PZT, aligning the components along that rod, and bonding the components together with the rod in place. Bonding is accomplished by inserting gauge wires, applying epoxy for both a bond and clamping the filter components together. Bonds to PZTs may be formed in a step-wise fashion or both may be formed at the same time. This method has been found to give excellent reproducibility. The reproducibility of a method for construction a temperature compensated FFP can be assessed by determining an average temperature coefficient of a number of FFPs prepared employing that method.

While it has been found unnecessary to specifically provide an alignment fixture offset within the FFP to facilitate rotary alignment, an offset can be introduced when constructing the FFP if it is desired. In the FFPs of this invention, an alignment fixture offset can be optionally introduced by creating a flat portion on the glass rod employed to align the FFP components for bonding.

The FFPs of this invention, particularly those that are temperature compensated can be employed in combination with wavelocking circuitry as is know in the art.

The temperature compensated FFPs described herein were constructed at normal room temperatures. The empirical balancing of temperature coefficients of the filters described herein was assessed within the expected normal operational temperatures (-25°C - +85°C) of the filter. Temperature drift is typically assessed by heating the test FFP above room temperature and/or cooling it below room temperature.

The term high precision as employed herein as used with in reference to alignment fixtures, spacers and machining and refer to machining to a minimum precision of about 0.0001 inch (1/10 mil).

The term optical as used in "optical fibre", "optical cavity" or "optical transmission", herein, refers to electromagnetic radiation having a wavelength such that the radiation can be transmitted by means of dielectric fibres with loss less than 25 db/Km. Presently, wavelengths in the range of 400 to 2,000 nm can be transmitted by optical fibres. The term "optically continuous" refers to optical fibres through which an optical signal can be transmitted. An optically continuous fibre may contain fibre ends or small fibre gaps so long as an optical signal can traverse the fibre. While FFPs have typically been employed for communications applications, with appropriate choice of materials FFPs can be employed for filtering of wavelengths other than those used in communication.

The ferrule holders of this invention can be adapted for use in fibre connectors and non-PZT-tuned FFPs. For example, two ferrule holders can be aligned, spaced and bonded together to provide a fibre splice fixture or a fixed-wavelength FFP. Alternatively, a ferrule holder and its passageway can be elongated to receive a ferrule at either longitudinal end and provided with means for securing ferrules; aligned with end faces opposed, in three-point contact in the holder.

PZT-tunable FFPs of this invention can employ cylindrical PZTs having a passageway extending along its elongation axis. The optical cavity of the FFP is formed within the passageway of the PZT between the mirrors of two inserted ferrules. The cylindrical PZT minimises the height and width of the FFP and greatly facilitates its use in confined spaces such as on circuit boards. With commercially available PZTs, and ferrule material, FFPs of this invention suitable for circuit board use can be constructed that are about 6.8 mm high, about 10 mm wide and about 30 mm long.

The FFPs of this invention can be employed in any device applications known in the art for FFPs. When necessary or beneficial FFPs can be mounted into devices using conventional art-known techniques of mechanical isolation to allow desired expansion of the cavity length and wavelength tuning. Miniaturised FFPs can be mounted onto circuit boards for example in foam holders, such as neoprene holders, which mechanically isolate the FFP from its surroundings, yet allow desired longitudinal expansion of the PZT and exert no forces which might disrupt alignment of the optical fibres of the FFP. Miniaturised FFPs are useful in any application where the size of a device is a concern. Miniaturised FFPs are particularly attractive for applications which require the use of multiple FFPs, for example in multi-channel selection, to minimise device size.

Recently, fixed wavelength and tunable fibre optic lasers having sub-millimeter gain cavities have been constructed using low-loss, high-finesse fibre ferrule resonance cavity configurations supported in low-loss ferrule alignment fixtures have been described (K. Hsu and C.M. Miller (1994) *Optics Letts*. 19(12):886-8). The ferule holders and alignment fixtures of the present invention can also be employed in FFP lasers in both single-cavity and multiple-cavity laser configurations.

The FFPs of this invention are tunable by application of an electric field to a PZT. A tunable FFP is a filter in which the wavelength or frequency of the transmission output of the filter is changed, shifted or tuned by changing the optical path length of the resonance cavity of the FFP. In contrast a fixed FFP is intended to transmit a fixed wavelength (or frequency) and to be operated at a substantially constant optical cavity length between the mirrors. In some fixed FFP applications, it may be desirable that the FFP be capable of small cavity length changes, for example to adjust to small source fluctuations. A filter that is tunable over a small range, e.g., less than 30% of an FSR is a narrowly tunable or trimmable FFP. FFPs of this invention can be employed in applications requiring either tunable or trimmable fixed FFPs.

Fixed cavity length FFPs can be tuned by changing the temperature of the filter or by changing refractive index. The ferrule holders of this invention while particularly adapted for use in PZT-tuned FFPs can be employed in combination with temperature tuning methods and tuning by changing the refractive index.

As will be appreciated by those in the art, chromatic dispersion, waveguide dispersion, inaccuracies in spectrum analysis, and errors in measurement can add to the measured variation in FSR as a function of wavelength. Methods for the minimisation of such dispersion effects and inaccuracies are well-known in the art. It is also well-known in the art that the wavelength range over which a FFP is operable (operable wavelength range) is limited by the wavelength dependence of the mirrors employed.

## Claims

1. A ferrule holder comprising:
a body having a core which is the portion of the body in contact with the ferrule and a peripheral portion around the periphery of the core both portions extending the length of the body, a passageway through the core body extending the length of the body, the passageway shaped to provide flats for three-point contact between the ferrule and the body core and sized to provide a close fit with the ferrule at the passageway flats yet allowing rotation of the ferrule in the passageway; and
means for securing the ferrule in the passageway to establish three-point contact between the ferrule and the holder body.

2. A ferrule holder according to claim 1 wherein the core portion of the holder body in contact with the ferrule comprises a material having a thermal expansion coefficient substantially matched to that of the thermal expansion coefficient of the ferrule material.

3. A ferrule holder according to any preceding claim wherein the entire body, both core and peripheral portion, are fabricated from a low-expansion metal alloy having a thermal expansion coefficient that is within about a factor of two higher or lower than that of the ferrule material.

4. A ferrule holder according to any preceding claim wherein the peripheral portion is made of a metal having a thermal expansion coefficient greater than or equal to about 10 ppm/°C and the core is made of a low-expansion metal alloy having a thermal expansion coefficient less than or equal to 8 ppm/°C.

5. A ferrule holder according to any preceding claim wherein the ferrules are made of Pyrex™, the core of the holder is made of Kovar™ and the peripheral portion of the holder is made of stainless steel.

6. A ferrule holder according to any preceding claim wherein the entire holder body or the body core is fabricated from a low-expansion metal alloy having a thermal expansion coefficient at room temperature of between about 5.4 and about 1.8 ppm/° C.

7. A ferrule holder according to any preceding claim wherein the entire body or the body core is fabricated from the low-expansion metal alloy Kovar™.

8. A ferrule holder according to any preceding claim wherein the means for securing the ferrule in the passageway comprises a means for applying a force on the ferrule substantially perpendicular to its longitudinal axis, the point of application of the force being positioned with respect to the passageway flats such that on application of the force three-point contact is established between the ferrule and the holder.

9. A ferrule holder according to any preceding claim which comprises a plurality of tapped screw holes along the length of the body each extending from the outer surface of the body into the core such that a screw tightened into any of the holes will function as a means for applying a force to the ferrule and each screw hole aligned in the body along the length of the passageway positioned with respect to the passageway flats such that on application of the force three-point contact is established between the ferrule and the holder.

10. A ferrule holder according to any preceding claim wherein the means for securing the ferrule in the passageway also comprises a displaceable ferrule retention element having an upper side and a lower side having a flat, the element positioned in the holder body intermediate between a ferrule in the passageway and the means for applying a force to the ferrule, the inner side of the retention element forming a portion of the shaped passageway and providing a flat in the passageway wherein when the force is applied the ferrule retention element is displaced toward the ferrule with the flat of its lower side contacting the ferrule and urging the ferrule in turn to contact the other two passageway flats to establish three-point contact between the ferrule and the core and thereby secure the ferrule in the passageway.

11. A ferrule holder according to any preceding claim wherein the ferrule retention element is made of the same material as the core.

12. A ferrule holder according to any preceding claim wherein the ferrule retention element is a resiliently displaceable arm integrally formed with the core, the lower side of which forms a portion of the passageway and provides a flat in the passageway.

13. A ferrule holder according to any preceding claim which comprises a body having a core extending the length of the body and a peripheral portion around the periphery of the core which also extends the length of the body, a passageway through the body core for receiving a ferrule extending the length of the body, shaped to provide three flats positioned equiangularly around the passageway and sized to provide a close fit with the ferrule yet allowing rotation of the ferrule in the passageway to provide three-point contact between the ferrule and the body core; a displaceable ferrule retention element having an upper and a lower side with a flat region thereon positioned in the holder body with the inner side of the retention element forming a portion of the shaped passageway and providing one of the three flats in the holder passageway; and

a plurality of tapped holes for receiving screws in the holder body substantially aligned along the length of the body passageway extending from the body surface into the body core communicating with the ferrule retention element;

wherein tightening a screw in a screw hole applies a force substantially perpendicular to the longitudinal axis of the ferrule displacing the ferrule retention element such that the flat of its lower side contacts a ferrule in the passageway and urges the ferrule in turn to contact the passageway flats to establish three-point contact with the holder and thereby secure the ferrule in the passageway and wherein the body core is made of a material having a thermal expansion coefficient substantially matched to that of the thermal expansion coefficient of the ferrule material.

14. A ferrule holder according to any preceding claim comprising a means at one longitudinal end for receiving and bonding to a piezoelectric transducer.

15. A ferrule holder according to claim 14 wherein the means for receiving and bonding to a piezoelectric transducer is a flange the outer diameter of which is sized for insertion in the passageway of a cylindrical piezoelectric transducer.

16. A ferrule holder according to claim 14 or 15, wherein the means for receiving and bonding to a piezoelectric transducer comprises a plurality of brackets extending outward from the body and substantially perpendicular to the longitudinal axis of the body.

17. A ferrule holder according to any of claims 14 to 16, further comprising a flange extending outward from the holder body at the longitudinal end comprising the means for receiving and bonding to a piezoelectric transducer the flange sized to receive a sleeve.

18. A fibre Fabry-Perot filter (FFP) which comprises:

a fibre ferrule assembly forming an optical cavity therein which comprises a first and a second ferrule each of which have an internal and an external longitudinal end, each of which has a substantially axial bore therethrough for receiving an optical fibre and a mirror transverse to the axial bore and the optical fibre therein, the reflective surface of the mirror facing the internal end of the ferrule; the ferrules positioned with internal ends opposed forming the optical cavity between opposing reflective surfaces of the mirrors; and

a fixture for holding the ferrules of the ferrule assembly with axial fibres in substantial alignment which comprises two ferrule holders each having an internal and external end and each having a passageway for receiving a ferrule, the holders connected to each other with internal ends opposed and spaced with respect to each other such that ferrules inserted, aligned and secured in the holders form the ferrule assembly and its optical cavity;

wherein the ferrule holders are ferrule holders according to any preceding claim.

19. An FFP according to claim 18 which is tunable by varying the length of the optical cavity, the fixture further comprising a piezoelectric transducer connecting the two ferrule holders such that the distance between the internal ends of the ferrules can be varied by application of a voltage to the piezoelectric transducer.

20 An FFP according to either of claims 18 or 19 wherein each holder comprises a flange at its internal end around the body passageway having an inner diameter sized to allow passage of a ferrule and an outer diameter sized to engage the piezoelectric transducer passageway facilitating bonding of the piezoelectric transducer between the holders and protecting the optical cavity from excess adhesive.

21. An FFP according to any of claims 18 to 20 wherein each holder further comprises a plurality of brackets extending outward from its body, each substantially perpendicular to the longitudinal axis of the holders, the brackets of each holder symmetrically disposed around that axis and adapted for receiving and bonding to a longitudinal end of a piezoelectric transducer, the brackets of opposed holders in the fixture aligned to receive and bond a piezoelectric transducer there between forming a piezoelectric transducer bridge between the ferrule holders.

22. An FFP according to any of claims 18 to 21 having two symmetrically disposed piezoelectric transducer bridges.

23. An FFP according to any of claims 18 to 22 further comprising a means for selectively adjusting the thermal expansion coefficient of the filter after it has been constructed.

24. An FFP of according to any of claims 18 to 23 which is mounted on a circuit board and wherein the FFP is miniaturised having a height of about 6.8 cm or less.

# FIGURE 1

# FIGURE 2

FIGURE 3

FIGURE 4

**FIGURE 5**

FIGURE 6

# FIGURE 7

FIGURE 8A

FIGURE 8C

FIGURE 8B

# FIGURE 9A

# FIGURE 9B

# FIGURE 10

FIGURE 11A

FIGURE 11B

FIGURE 12A

FIGURE 12B

European Patent
Office

**EUROPEAN SEARCH REPORT**

Application Number

EP 94 30 9028

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE-U-87 04 721 (SIEMENS) * the whole document * | 1 | G02B6/34 G02B6/38 |
| A | | 8,9,12 | |
| | --- | | |
| A | DE-A-26 45 701 (LICENTIA GMBH) 13 April 1978 * page 9, last paragraph - page 10, paragraph 2; figure 4 * | 1,12 | |
| | --- | | |
| A | EP-A-0 325 431 (MINNESOTA MINING & MFG ) 26 July 1989 * column 4, line 20 - line 30; figures 1,4 * | 1 | |
| | --- | | |
| A | US-A-5 065 011 (FUJIHARA MAKOTO ET AL) 12 November 1991 * column 4, line 13 - line 27; figure 5 * | 5-7 | |
| | --- | | |
| A,D | ELECTRONICS LETTERS, vol. 26, no.25, 6 December 1990 STEVENAGE GB, pages 2122-2123, MILLER ET AL. * page 2123; figure 3 * | 2-6,14, 15,18, 19,23 | TECHNICAL FIELDS SEARCHED (Int.Cl.6) G02B G01J |
| | --- | | |
| A,D | EP-A-0 457 484 (AMERICAN TELEPHONE & TELEGRAPH ) 21 November 1991 * column 6, line 28 - line 36 * * column 9, line 8 - column 10, line 44; figures 1,8 * | 18,19 | |
| | --- | | |
| P,A, D | US-A-5 289 552 (MILLER CALVIN M ET AL) 22 February 1994 * column 9, line 28 - column 14, line 16; figure 8 * | 1-3,5, 8-10,13, 14,16, 18-23 | |
| | ----- | | |

The present search report has been drawn up for all claims

| Place of search | Date of completion of the search | Examiner |
|---|---|---|
| BERLIN | 10 March 1995 | von Moers, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)